(19) Europäisches Patentamt

European Patent Office

Office européen des brevets

(11) **EP 0 776 165 B1**

## (12) FASCICULE DE BREVET EUROPEEN

(45) Date de publication et mention
de la délivrance du brevet:
**07.01.1999 Bulletin 1999/01**

(21) Numéro de dépôt: **94925515.2**

(22) Date de dépôt: **17.08.1994**

(51) Int. Cl.$^6$: **A23C 11/10**

(86) Numéro de dépôt international:
**PCT/FR94/01011**

(87) Numéro de publication internationale:
**WO 96/04800 (22.02.1996 Gazette 1996/09)**

(54) **PROCEDE DE PREPARATION D'UN LAIT D'AMANDES, ET PRODUITS OBTENUS**

VERFAHREN ZUR HERSTELLUNG VON MANDELMILCH UND DAMIT HERGESTELLTE
PRODUKTE

METHOD FOR PREPARING ALMOND MILK AND PRODUCTS OBTAINED

(84) Etats contractants désignés:
**AT BE CH DE DK ES FR GB GR IT LI NL PT SE**

(43) Date de publication de la demande:
**04.06.1997 Bulletin 1997/23**

(73) Titulaires:
• **Berger, Jacques
04700 Oraison (FR)**
• **Bravay, Guilaine
04700 Oraison (FR)**
• **Berger, Martine
04700 Oraison (FR)**

(72) Inventeurs:
• **Berger, Jacques
04700 Oraison (FR)**

• **Bravay, Guilaine
04700 Oraison (FR)**
• **Berger, Martine
04700 Oraison (FR)**

(74) Mandataire: **Roman, Michel et al
CABINET ROMAN
35 rue Paradis, BP 2224
13207 Marseille Cédex 1 (FR)**

(56) Documents cités:
**WO-A-93/16608          DE-A- 2 019 262
FR-A-   561 351          FR-A- 1 550 401
US-A- 4 639 374**

## Description

La présente invention a pour objet un procédé de préparation d'un lait d'amandes, ainsi que les produits obtenus.

Le but de l'invention est de fournir à partir d'une matière première végétale un produit apte à se substituer aux laits d'origine animale, et en particulier au lait de vache, pour servir de base à la réalisation d'une gamme de produits nouveaux destinés à l'alimentation humaine et permettant d'atteindre une grande hygiène alimentaire.

Dans l'alimentation courante, les aliments comme le lait, le beurre, le yaourt, les sauces, sont tous issus de productions animales. Ces aliments consommés en trop grande quantité tous les jours, apportent un surplus de matière grasse dont les acides gras sont saturés. Ils jouent donc un rôle néfaste chez les personnes prédisposées aux maladies cardio-vasculaires.

Par ailleurs, certains composants d'aliments d'origine animale sont parfois mal supportés par une fraction plus ou moins importante des consommateurs. Par exemple, pour la majorité d'entre eux, le lait de vache ne pose apparemment pas de problèmes d'assimilation: c'est une source de protéines et de calcium. Cependant, pour d'autres il est réellement mal toléré. Pour ceux-ci, les protéines du lait de vache peuvent provoquer des allergies, particulièrement chez les jeunes enfants.

En conséquence, la production d'aliments nouveaux plus digestes, riches en protéines non allergènes, sans cholestérol et riches en acides gras insaturés présente un réel intérêt nutritionnel et devient même une nécessité pour une partie de la population.

Le brevet DE-A-2 019 262 décrit la préparation d'un lait d'amandes par broyage des amandes et mélange avec de l'eau, l'émulsion obtenue est filtrée, additionnée d'un alginate et de sucre, et le fait obtenu est stérilisé ou pasteurisé et emballé.

Le brevet N° US 2 294 682 déposé le 11 février 1941 décrit un procédé visant à fabriquer un beurre végétal à partir d'arachides ou légumineuse similaires broyés, mis en solution aqueuse et soumis à une protéolyse enzymatique à 27-54°C, et arrêtée a la fin de l'opération par destruction de l'enzyme à 70-110°C.

Le brevet N° US 4 639 374 du 8 mai 1984 concerne une pâte d'amandes grillées destinée à la confection de boissons ou de desserts. Il décrit en particulier le mode de réalisation d'un "lait acide d'amandes" obtenu en passant d'abord les amandes grillées dans une presse à 200 kg/cm$^2$ pour éliminer 50% de la matière grasse, en les mélangeant ensuite avec de l'eau, du lait, du sucre un épaississeur et un surfactant, puis en passant le produit obtenu dans un malaxeur-homogénisateur et dans un homogénéisateur, avant de le stériliser à 90°C, de le faire fermenter à 37-40°C, et de lui ajouter du sucre, la température étant alors portée à 75°C, le produit étant finalement filtré et refroidi.

Les produits objets de ces brevets ont des applications très limitées et leurs inventeurs n'envisagent d'ailleurs pas de les utiliser comme substituts de laits d'origine animale.

Le brevet N° WO 93 16 608, déposé par l'auteur de la présente demande, décrit un procédé dans lequel une purée très fine de fruits ou graines décortiquées, est mise en solution aqueuse et soumise à une montée progressive en température entre 40 et 70°C au cours de laquelle elle subit une homogénéisation sous une pression de 200 000 à 500 000 hPa conduisant à une granulométrie inférieure à 50 μm, puis une hydrolyse enzymatique par protéases, amylases ou glucanases d'origine microbienne hydrolysant spécifiquement les protéines ou les composés polysaccharidiques, la température étant ensuite montée jusqu'à 110-115°C pour arrêter les réactions enzymatiques et assurer la stabilité bactériologique par pasteurisation.

Malheureusement les produits obtenus, bien que répondant parfaitement au but recherché au point de vue de leur composition, se sont avérés insuffisamment stables pour envisager une production industrielle.

La présente invention a pour objet de proposer un procédé permettant, à partir de matière première végétale déterminée, la fabrication d'un lait végétal parfaitement stable à température ambiante, présentant une texture et un aspect se rapprochant de ceux du lait animal, susceptible de se substituer à celui-ci pour la confection d'aliments pouvant être consommés tous les jours, et caractérisé par l'absence de lactose, de graisses saturées, de cholestérol et de protéines allergènes. Le principal intérêt de l'invention réside en la production d'aliments nouveaux présentant un intérêt nutritionnel du fait de la composition particulière des matières premières utilisées et aussi du procédé permettant l'amélioration dc la qualité organoleptique. Ces aliments nouveaux sont obtenus à partir de graines protéagineuses sélectionnés pour leur richesse en protéines, en matières grasses insaturées, en minéraux et provenant éventuellement de l'agriculture biologique.

Le procédé en général objet de l'invention est défini dans la revendication 1.

En particulier le procédé consiste à chauffer à 90°C une dispersion aqueuse de poudre d'amandes partiellement déshuilées, dosée à 8% ± 1% et additionnée d'environ 0,1% d'un hydrocolloïde de stabilisation, durant un laps de temps suffisant pour obtenir la solubilisation des composés, puis à procéder successivement à un broyage en phase aqueuse, à une clarification par centrifugation destinée à éliminer les particules assez grosses pour être sensible à la langue ou au palais, à une stérilisation par traitement "UHT", à une homogénéisation à 180 000 hPa en cours de refroidissement, et enfin à un conditionnement aseptique du produit obtenu.

La description détaillée ci-après se rapporte à un exemple non limitatif de l'une des formes de réalisation de l'objet de l'invention.

La matière première végétale concernée dans l'invention est constituée d'amandes d'amandier décortiquées, émondées, non torréfiées, partiellement déshuilées, de préférence par pressage à froid, et mises en poudre. Sa composition pourra varier dans les proportions suivantes:

| - Humidité | 6% ± 2% |
|---|---|
| - Amidon | 12% ± 4% |
| - Sucres solubles | 8% ± 4% |
| - Glucides totaux | 17% ± 3% |
| - Protides | 53% ± 3% |
| - Fibres | 6% ± 1% |
| - Cendres | 6% ± 1% |

Le procédé est caractérisé par la succession de phases ci-après:

La poudre d'amande est tout d'abord broyée à sec pour obtenir un produit qui est mis en dispersion dans de l'eau froide, à raison de 8% ± 1% de farine en poids. On ajoute au mélange 0,1% ± 0,05% d'un hydrocolloïde de stabilisation, puis l'ensemble est chauffé à 90°C et subit un chambrage (maintien de la température) durant un laps de temps suffisant, typiquement 5 minutes, pour obtenir la solubilisation des composés nutritifs, protéines, glucides et minéraux.

En vue d'améliorer le rendement de l'étape de clarification ultérieure, il est alors procédé à un broyage en phase aqueuse, de préférence dans un broyeur colloïdal.

Puis la préparation, après avoir été refroidie à 55°C environ de manière à provoquer une augmentation de la viscosité, est soumise à une clarification par centrifugation, durant 2 minutes environ, sous une accélération $a = 38\ 000\ \text{m/s}^2 \pm 3\%$, avec pour objectif une élimination aussi complète que possible des particules assez grosses pour être détectables à la langue ou au palais (particules supérieures à 50 μm).

Le produit est alors stérilisé à haute température, maintenue le temps nécessaire à l'obtention de la valeur stérilisatrice souhaitée. Au cours du refroidissement a lieu une homogénéisation sous pression à 180 000 hPa (180 bar) et, finalement, un conditionnement aseptique du produit obtenu.

L'homogénéisation se fera dans un homogénéisateur produisant une réduction supplémentaire de la granulométrie. La durée de passage dans l'homogénéisateur sera de quelques secondes.

L'ensemble des opérations décrites ci-dessus peut parfaitement être réalisé de manière continue, sur un matériel de type laitier.

Les paramètres opératoires sont fixés de façon à réaliser une solubilisation contrôlée des fractions protéiques et polysaccharidiques, une dispersion homogène et stable de la matière en suspension, ainsi qu'une régulation de la viscosité finale du produit.

La composition biochimique du produit final devra correspondre aux valeurs suivantes:

| - Protides | 3,6% ± 0,2% |
|---|---|
| - Lipides | 0,9% ± 0,2% |
| - Glucides totaux | 0,5% ± 0,1% |
| - Matière sèche totale | 5,5% ± 0,5% |

A titre indicatif, la composition biochimique du lait de vache est donnée ci-après:

| - Protides | 3,08 à 3,70% |
|---|---|
| - Lipides | 3,50 à 3,60% |
| - Glucides totaux | 4,50% |

Malgré la différence de leurs compositions, la texture, l'aspect et la couleur du produit selon l'invention devront être proches de ceux du lait de vache demiécrémé.

Un des caractères innovants de l'invention, est le fait qu'elle s'applique au domaine limité des graines azotées comme matières nobles, sélectionnées, de qualité, et que les produits obtenus sont destinés à l'alimentation humaine.

La finalité du procédé est d'obtenir un élément permettant, comme le lait de vache, la production de produits variés de grande valeur nutritionnelle.

Ces produits sont nouveaux et leur mise au point demande l'invention de recettes nouvelles. En effet, l'accent étant mis sur l'aspect nutritionnel de ces produits, l'addition d'adjuvants permettant de parfaire leur valeur biologique est à prendre en considération. La valeur biologique des protéines sera optimisée éventuellement par l'ajout d'acides aminés bio-assimilables, supprimant ainsi les facteurs limitants. Il pourra également être ajouté des ingrédients tels que fruits, herbes aromatiques, lipides ou glucides particuliers, substances de protection, minéraux, oligo-éléments et vitamines, qui seront ajustés aux valeurs souhaitables pour une alimentation courante ou particulière. Les produits obtenus pourront se substituer partiellement aux produits laitiers et carnés, par exemple dans leurs fonctions organoleptiques, digestives, physiologiques ou de service (caractère prêt à l'emploi).

La nature des divers éléments constitutifs donne à l'objet de l'invention un maximum d'effets utiles qui n'avaient pas été, à ce jour, obtenus par des procédés similaires.

**Revendications**

1. Procédé de préparation d'un lait d'amandes ayant pour objet la production, à partir d'une matière première végétale, d'un produit apte à se substituer aux laits d'origine animale, et en particulier au lait de vache, pour servir de base à la réalisation d'une gamme de produits destinés à l'alimentation humaine, et permettant d'atteindre une grande hygiène alimentaire, ledit procédé comportant les phases successives ci-après:

   - broyage à sec de poudre d'amandes non torréfiées partiellement déshuilées,
   - dispersion du broyat dans de l'eau froide à laquelle on ajoute un hydrocolloïde de stabilisation,
   - chauffage de la dispersion à une température voisine de 90°C et chambrage jusqu'à solubilisation des composés nutritifs (protéines, glucides et minéraux),
   - broyage de la dispersion en phase aqueuse pour diminuer la granulométrie,
   - clarification par centrifugation de la dispersion de manière à éliminer les particules assez grosses pour être sensible à la langue ou au palais,
   - stérilisation par traitement "UHT" et refroidissement du produit obtenu,
   - homogénéisation sous pression, et
   - conditionnement aseptique dudit produit.

2. Procédé selon la revendication 1, se caractérisant par le fait que la matière première est constituée d'amandes d'amandier décortiquées, émondées, non torréfiées, partiellement déshuilées, de préférence par pressage à froid, et mises en poudre, la composition de cette poudre étant la suivante:

| - Humidité | 6% ± 2% |
| --- | --- |
| - Amidon | 12% ± 4% |
| - Sucres solubles | 8% ± 4% |
| - Glucides totaux | 17% ± 3% |
| - Protides | 53% ± 3% |
| - Fibres | 6% ± 1% |
| - Cendres | 6% ± 1% |

3. Procédé selon l'une quelconque des revendications précédentes, se caractérisant par le fait que pour créer la dispersion aqueuse, la poudre d'amande est dosée à 8% ± 1% en poids, et l'hydrocolloïde de stabilisation à 0,1% ± 0,05%, également en poids.

4. Procédé selon l'une quelconque des revendications précédentes, se caractérisant par le fait que le broyage en phase aqueuse a lieu dans un broyeur colloïdal.

5. Procédé selon l'une quelconque des revendications précédentes, se caractérisant par le fait que la clarification par centrifugation s'effectue à une température voisine de 55°C, durant 2 minutes environ sous une accélération de 38 000 m/s$^2$ ± 3%, et que les paramètres sont fixés de manière à obtenir une élimination aussi complète que possible des particules assez grosses pour être détectable à la langue ou au palais.

6. Procédé selon l'une quelconque des revendications précédentes, se caractérisant par le fait que l'homogénéisation après clarification et stérilisation se fait sous une pression voisine de 180 000 hecto-Pascal, en cours de refroidissement.

7. Procédé selon l'une quelconque des revendications précédentes, se caractérisant par le fait que l'ensemble des opérations est réalisé en continu au moyen de matériel de type laitier.

8. Lait végétal obtenu à partir de poudre d'amandes par application du procédé selon les revendications précédentes, destiné à se substituer aux laits d'origine animale, et en particulier au lait de vache pour servir de base à la réalisation d'une gamme de produits destinés à l'alimentation humaine, caractérisé en ce que sa composition biochimique correspond aux valeurs ci-après:

| - Protides | 3,6% ± 0,2% |
| --- | --- |
| - Lipides | 0,9% ± 0,2% |
| - Glucides totaux | 0,5% ± 0,1% |
| - Matière sèche totale | 5,5% ± 0,5% |

9. Lait végétal selon la revendication 8, se caractérisant par le fait que sa texture, son aspect et sa couleur sont proches de ceux du lait de vache demiécrêmé.

**Claims**

1. Process for the preparation of an almond milk for the purpose of producing a product from a vegetable raw material which is capable of replacing original animal milks and especially cow's milk, in order to form a base for the production of a range of products for human consumption to a high level of food hygiene, the said process comprising the following phases successively:

- dry grinding of non-roasted, partly deoiled almond powder,
- dispersal of the ground product in cold water to which has been added a stabilising hydro-colloid,
- heating of the dispersed product to a temperature close to 19°C and maintaining at room temperature until the nutrient compounds dissolve (protids, glucoses and minerals),
- grinding of the dispersed product in its aqueous phase to reduce the particle sizes,
- centrifugal clarification of the dispersed product so as to eliminate particles large enough to be detected by the tongue or the pallet,
- sterilisation by UHT treatment and cooling of the product obtained,
- mixing under pressure until smooth,
- and aseptic packaging of the said product.

2. Process as per claim 1 characterised in that the raw material consists of dehusked, trimmed, non-roasted almonds, partly deoiled, preferably by cold pressing, and reduced to powder, the composition of this powder being as follows:

| - water content | 6% ±2% |
| --- | --- |
| - starch | 12% ±4% |
| - soluble sugars | 8% ±4% |
| - total glucose | 17% ±3% |
| - protids | 53% ±3% |
| - fibres | 6% ±1% |
| - ashes | 6% ±1% |

3. Process as per any one of the aforesaid claims characterised in that to create the aqueous mixture, the almond powder is dosed at 8% ±1% by weight, and the stabilising hydro-colloid at 0.1% ±0.05%, also by weight.

4. Process as per any one of the aforesaid claims characterised in that grinding in the aqueous phase takes place in a colloidal grinder.

5. Process as per any one of the aforesaid claims categorised in that the centrifugal clarification takes place at a temperature close to 55°C for around two minutes at an acceleration of 38000 $m/m^2$ ±3%, and that the parameters are fixed so as to eliminate as thoroughly as possible particles large enough to be detected by the tongue or the pallet.

6. Process as per any one of the aforesaid claims, characterised in that mixing after clarification and sterilisation takes place at the pressure close to 18000 hectoPascals during cooling.

7. Process as per any one of the aforesaid claims characterised in that all the operations take place continuously using dairy industry type equipment.

8. Vegetable milk obtained using almond powder by application of the process according to the aforesaid claims, for use in place of animal milks, and especially cow's milk, to be used as the base for preparing a range of products for human consumption, characterised into that the biochemical composition corresponds to the following values:

| - protids | 3.6% ±0.2% |
| --- | --- |
| - lipids | 0.9% ±0.2% |
| - total glucose | 0.9% ±0.1% |
| - total dry matter | 5.5% ±0.5% |

9. Vegetable milk as per claim 8 characterised in that its texture, its appearance and its colour are close to those of semi-skimmed cow's milk.

**Patentansprüche**

1. Verfahren zur Aufbereitung einer Mandelmilch zum Zweck der Produktion, ausgehend von einem pflanzlichen Rohstoff, eines Produktes, geeignet, Milch tierischen Ursprungs, insbesondere Kuhmilch, zu ersetzen, um als Grundlage der Herstellung einer Reihe von für die menschliche Ernährung bestimmten Produkten zu dienen und eine große Nahrungshygiene zu erreichen, wobei das besagte Verfahren aus den nachstehenden aufeinander folgenden Phasen besteht:

- trockenes Mahlen zu Pulver von nicht gebrannten, teilweise entölten Mandeln,
- Dispersion des Mahlguts in kaltem Wasser, dem ein Stabilisierungs-Hydrokolloid hinzugefügt wird,
  Erhitzen der Dispersion zu einer Temperatur nahe 90° und Einschließen bis zum Solubilisieren der nahrhaften Komponenten (Proteine, Kohlehydrate und Mineralstoffe),

- Mahlen der wässerigen Dispersion, um die Granulometrie zu verringern,
- Klären der Dispersion durch Zentrifugieren, um größere Partikel auszuscheiden, die auf der Zunge oder am Gaumen gefühlt werden können,
- Sterilisieren durch "UHT"-Behandlung und Kühlen des erhaltenen Produktes,
- Homogenisieren unter Druck, und
- steriles Verpacken des besagten Produktes.

2. Verfahren gemäß Anspruch 1, dadurch gekennzeichnet, daß der Rohstoff aus ausgekernten, geschälten, nicht gebrannten, teilweise vorzugsweise durch Kaltpressen entölten und zu Pulver gemahlenen Mandeln von Mandelbäumen besteht, wobei dieses Pulver die folgende Zusammensetzung hat:

| - Feuchtigkeit | 6 % ± 2 % |
|---|---|
| - Stärke | 12 % ± 4 % |
| - lösliche Zucker | 8 % ± 4 % |
| - Gesamt-Kohlehydrate | 17 % ± 3 % |
| - Protide | 53 % ± 3 % |
| - Faserstoffe | 6 % ± 1 % |
| - Asche | 6 % ± 1 % |

3. Verfahren gemäß irgendeinem der vorhergehenden Ansprüche, dadurch gekennzeichnet, daß zur Erzeugung der wässerigen Dispersion das Mandelpulver zu 8 % ± 1 % in Gewicht und das Stabilisierungs-Hydrokolloid zu 0,1 % ± 0,05 % ebenfalls in Gewicht dosiert wird.

4. Verfahren gemäß irgendeinem der vorhergehenden Ansprüche, dadurch gekennzeichnet, daß das Mahlen in wässeriger Phase in einer Kolloidalmühle erfolgt.

5. Verfahren gemäß irgendeinem der vorhergehenden Ansprüche, dadurch gekennzeichnet, daß die Klärung durch Zentrifugieren bei einer Temperatur von ungefähr 55°C während ca. 2 Minuten mit einer Beschleunigung von 38 000 m/s$^2$ ± 3 % erfolgt, und daß die Parameter auf solche Weise festgelegt sind, die größeren Partikel, die auf der Zunge oder am Gaumen gespürt werden können, so vollständig wie möglich auszuscheiden.

6. Verfahren gemäß irgendeinem der vorhergehenden Ansprüche, dadurch gekennzeichnet, daß die Homogenisierung nach Klärung und Sterilisierung unter einem Druck von ungefähr 180 000 Hektopascal im Lauf der Kühlung erfolgt.

7. Verfahren gemäß irgendeinem der vorhergehenden Ansprüche, dadurch gekennzeichnet, daß alle Vorgänge kontinuierlich mit Geräten des Molkereityps ausgeführt werden.

8. Pflanzenmilch erzeugt aus Mandelpulver durch Anwendung des in den vorhergehenden Ansprüchen beschriebenen Verfahrens, dazu bestimmt Tiermilch und insbesondere Kuhmilch zu ersetzen, um als Grundlage für die Produktion einer Reihe von Produkten zur menschlichen Ernährung zu dienen, dadurch gekennzeichnet, daß ihre biochemische Zusammensetzung den folgenden Werten entspricht:

| - Protide | 3,6 % ± 0,2 % |
|---|---|
| - Lipide | 0,9 % ± 0,2 % |
| - Gesamt-Kohlehydrate | 0,5 % ± 0,1 % |
| - gesamte Trockenstoffe | 5,5 % ± 0,5 % |

9. Pflanzenmilch gemäß Anspruch 8, dadurch gekennzeichnet, daß ihre Textur, ihr Aussehen und ihre Farbe nahe der halb-entfetteten Kuhmilch liegen.